# EUROPEAN PATENT SPECIFICATION

(11) **EP 4 375 878 B1**
(45) Date of publication and mention of the grant of the patent: **15.07.2026**
(21) Application number: 23209621.4
(22) Date of filing: 14.11.2023
(51) Int. Cl.: G06N 3/0464, G06N 3/0495, G06N 3/063

(54) **DNNS ACCELERATION WITH BLOCK-WISE N:M STRUCTURED WEIGHT SPARSITY**
DNNS-BESCHLEUNIGUNG MIT BLOCKWEISER N:M-STRUKTURIERTER GEWICHTSSCHONUNG
ACCÉLÉRATION DE DNNS AVEC RARETÉ DE POIDS À STRUCTURE N:M PAR BLOCS

(30) Priority: 15.11.2022 US 202263425678 P; 13.01.2023 US 202318097200
(43) Date of publication of application: 29.05.2024
(73) Proprietor: Samsung Electronics Co., Ltd., Suwon-si, Gyeonggi-do 16677 (KR)
(72) Inventor: ABDELAZIZ, Hamzah, San Jose, CA 95134 (US); HASSOUN, Joseph, San Jose, CA 95134 (US)
(74) Representative: Kuhnen & Wacker Patent- und Rechtsanwaltsbüro PartG mbB

(56) References cited:
- XU MINGYANG ET AL: "An Efficient CNN Training Accelerator Leveraging Transposable Block Sparsity", 2022 IEEE 4TH INTERNATIONAL CONFERENCE ON ARTIFICIAL INTELLIGENCE CIRCUITS AND SYSTEMS (AICAS), IEEE, 13 June 2022 (2022-06-13), pages 230 - 233, XP034180127, DOI: 10.1109/AICAS54282.2022.9869938
- HUIZI MAO ET AL: "Exploring the Regularity of Sparse Structure in Convolutional Neural Networks", 5 June 2017 (2017-06-05), XP055586517, Retrieved from the Internet <URL:https://arxiv.org/pdf/1705.08922.pdf> [retrieved on 20190507]
- HUANG GUYUE ET AL: "Shfl-BW accelerating deep neural network inference with tensor-core aware weight pruning", PROCEEDINGS OF THE 27TH ACM SYMPOSIUM ON VIRTUAL REALITY SOFTWARE AND TECHNOLOGY, ACM, NEW YORK, NY, USA, 10 July 2022 (2022-07-10), pages 1153 - 1158, XP058788837, ISBN: 978-1-4503-9092-7, DOI: 10.1145/3489517.3530588

## Description

### TECHNICAL FIELD

The subject matter disclosed herein relates to Deep Neural Networks (DNNs). More particularly, the subject matter disclosed herein relates to software and a hardware codesign technique that induces and utilizes sparsity in layers of a DNN to efficiently accelerate computation of the DNN.

### BACKGROUND

Neural processing units (NPU) are used to accelerate computation of deep learning algorithms, such as a convolution neural network (CNN). Convolution layer computations are based on sliding a convolution kernel across an input tensor (also called an input feature map). Multiple inputs are convoluted using different kernels to produce multiple output tensors (also called output feature maps). At each kernel position, the computation is basically a dot-product of the input pixels and the kernel weights in all input dimensions. Pruning methods aim to induce sparsity in weights (i.e., zero values) that may be skipped that helps reduce computation complexity as well as reducing a memory-size requirements. Sparsity in weight values may be either fine-grained or coarse-grained. Fine-grained sparsity may achieve high a sparsity ratio, but may not be hardware friendly.

XU MINGYANG ET AL: "An Efficient CNN Training Accelerator Leveraging Transposable Block Sparsity", 2022 IEEE 4TH INTERNATIONAL CONFERENCE ON ARTIFICIAL INTELLIGENCE CIRCUITS AND SYSTEMS (AICAS), IEEE, XP034180127, relates to an algorithm for sparse training processes in which weight matrices are pruned in a fine-grained block-wise manner.

### SUMMARY

The invention is set out in the appended set of claims. An example embodiment provides an accelerator core that may include a first buffer, a second buffer, and at least two groups of k processing elements. The first buffer may be configured to receive at least one group of block-wise sparsified first elements in which each group may include M blocks of first elements. A block size (k,c) of each block may include k rows and c columns in which k is greater than or equal to 2, k times p equals K, c times q equals C in which K is an output channel dimension of a tensor of first elements, C is a number of input channels of the tensor of first elements, M is an integer, p is an integer and q is an integer. The second buffer may be configured to receive second elements. Each respective group of processing elements may be configured to receive from the first buffer k rows of first elements from a block of first elements corresponding to the group of PEs, and may be configured to receive second elements from the second buffer that correspond to first elements received from the first buffer. In one embodiment, the block size (k,c) may be one of (1,4), (2,1), (2,2), (4,1), (2,4), (4,4) and (8,1). In another embodiment, the at least one group of block-wise sparsified first elements may be arranged in a N:M block-wise structured sparsity in which N is an integer. In still another embodiment, the N:M block-wise structured sparsity may be a 2:4 block-wise structured sparsity. In yet another embodiment, the accelerator core may further include at least one second buffer in which each respective second buffer may be associated with a corresponding group of processing elements. In one embodiment, each respective second buffer broadcasts second elements to the k processing elements in a group of processing elements that corresponds to the second buffer. In another embodiment, each processing element generates a dot-product of the first elements and the second elements received by the processing element. In still another embodiment, the first elements may be weight elements and the second elements may be activation elements.

An example embodiment provides an accelerator core that may include a weight buffer, an activation buffer, and at least two groups of k processing elements in each group. The weight buffer may be configured to receive at least one group of block-wise sparsified weight elements in which each group may include M blocks of first elements. A block size (k,c) of each block may include k rows and c columns in which k is greater than or equal to 2, k times p equals K, c times q equals C in which K is an output channel dimension of a tensor of first elements, C is a number of input channels of the tensor of first elements, M is an integer, p is an integer and q is an integer. The activation buffer may be configured to receive activation elements. Each respective group of processing elements may be configured to receive from the weight buffer k rows of weight elements from a block of weight elements that corresponds to the group of processing elements, and may be configured to receive activation elements from the activation buffer that correspond to weight elements received from the weight buffer. In one embodiment, the block size (k,c) may be one of (1,4), (2,1), (2,2), (4,1), (2,4), (4,4) and (8,1). In another embodiment, the at least one group of block-wise sparsified weight elements may be arranged in a N:M block-wise structured sparsity in which N is an integer. In still another embodiment, the N:M block-wise structured sparsity may be a 2:4 block-wise structured sparsity. In yet another embodiment, the accelerator core may further include at least one activation buffer in which each respective activation buffer may be associated with a corresponding group of processing elements. In one embodiment, each respective activation buffer broadcasts activation elements to the k processing elements in a group of processing elements that corresponds to the activation buffer. In another embodiment, each processing element generates a dot-product of the weight elements and the activation elements received by the processing element.

An example embodiment provides a method that may include: receiving, by a first buffer, at least one group of block-wise sparsified first elements, in which each group may include M blocks of first elements, a block size (k,c) of each block may include k rows and c columns in which k is greater than or equal to 2, k times p equals K, and c times q equals C in which K is an output channel dimension of a tensor of first elements, C is a number of input channels of the tensor of first elements, M is an integer, p is an integer and q is an integer; receiving, by a second buffer, second elements; and receiving, from the first buffer by at least two groups of processing elements, k rows of first elements from a corresponding block of first elements, each group comprising k processing elements; and receiving, from the second buffer by each group of processing elements, second elements that correspond to first elements received by each group of processing elements from the first buffer. In one embodiment, the block size (k,c) may be one of (1,4), (2,1), (2,2), (4,1), (2,4), (4,4) and (8,1), and the at least one group of block-wise sparsified first elements may be arranged in a N:M block-wise structured sparsity. In another embodiment, the N:M block-wise structured sparsity may be a 2:4 block-wise structured sparsity in which N is an integer. In still another embodiment, the second buffer may be at least one second buffer in which each respective second buffer is associated with a corresponding group of processing elements, and the method may further include: broadcasting, from each respective second buffer, second elements to the k processing elements in a group of processing elements that corresponds to the second buffer. In yet another embodiment, the first elements may be weight elements and the second elements may be activation elements.

### BRIEF DESCRIPTION OF THE DRAWING

In the following section, the aspects of the subject matter disclosed herein will be described with reference to exemplary embodiments illustrated in the figure, in which:
FIG. 1 depicts an example embodiment of a block-wise sparsity arrangement for a convolution kernel according to the subject matter disclosed herein;
FIG. 2 depicts a block diagram of an example embodiment of hardware for a conventional accelerator that is configured for fine-grained sparsity;
FIG. 3 depict a block diagram of an example embodiment of hardware for an block-wise sparsity accelerator according to the subject matter disclosed herein; and
FIG. 4 depicts an electronic device that may include a DNN that utilizes block-wise sparsity according to the subject matter disclosed herein.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The subject matter disclosed herein provides a software/hardware codesign technique to efficiently accelerate computation of DNNs that induces and utilizes sparsity in layers of a DNN. The software aspect may be used to induce a structured-sparsity pattern in DNN weights (e.g., kernels of Conv2D layers) that may have and a relatively low metadata overhead. An induced sparsity pattern may be a coarse grain sparsity pattern that forms a block-wise 2:4 (2 out of 4) sparsity pattern for a 50% sparsity ratio. The hardware aspect may utilize the induced sparsity by skipping ineffectual multiplications (i.e., multiplication with zeros) using relatively low-overhead circuitry. The overhead hardware circuitry may be amortized the sparsity among a group of processing elements (PE) that share the same inputs and process the inputs with weights in the same block of the block-wise structure. Accordingly, the subject matter disclosed herein may be used to build an efficient NPU IP core having an improved area/power efficiency characteristic.

In contrast to existing technologies that are based on structured fine-grain 2:4 (i.e., N:M for generality) sparsity, the subject matter disclosed herein utilizes a coarse-grain 2:4 sparsity pattern that uses a smaller hardware overhead footprint than used by structured fine-grain networks. In one embodiment, the subject matter disclosed herein provides a block-wise 2:4 (or generally N:M) pruning method that induces a coarse-grain sparsity pattern in DNN weights that can be efficiently utilized in a hardware accelerator so that the accelerator has a low memory footprint and operates with efficient and high-performance computations. The hardware aspect has a relatively low overhead that utilizes the sparsity by skipping ineffectual computations, thereby speeding up DNN computation.

Coarse-grained sparsity, such as a block-wise coarse-grain sparsity disclosed herein, may be processed by hardware more efficiently than fine-grained sparsity. Processing sparsity in hardware (HW) acceleration introduces logic overhead in both the compute data path and in control units. Block-wise sparsity may help reduce the overhead by amortizing, or spreading, the sparsity overhead over a group of Multiply and Accumulate (MAC) units (dot-product units). It also may allow each group of MAC units to share (i.e., reuse) the same inputs because the MAC units may share the same sparsity pattern.

Structured and balanced sparsity patterns may be also utilized by a 2:4 block-wise sparsity pruning. A 2:4 sparsity provides a balanced and predictable sparsity pattern that may be efficiently utilized in a hardware design. Fine-grain sparsity may introduce a hardware overhead on a per MAC unit that increases area/power costs, and reduced input reuse/sharing among MAC units.

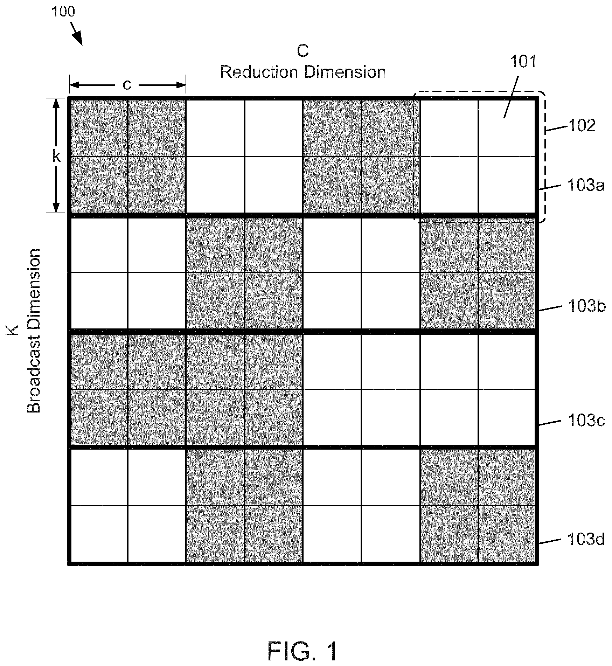

FIG. 1 depicts an example embodiment of a block-wise sparsity arrangement 100 for a convolution kernel according to the subject matter disclosed herein. The block-wise sparsity arrangement 100 includes a K output channel dimension, a C input channel dimension. Each square 101 (of which only one square 101 is indicated) represents an element of, for example, a weight matrix. A sparsity block size may be defined by (k,c) in which k is the block dimension (i.e., the number of rows of the block) in the broadcast dimension (e.g., the output channel (K) dimension in the convolution layer) and c is the block dimension (i.e., the number of columns of the block) in the reduction dimension (e.g., the input channel (C dimension) in the convolution layers. For example, a sparsity block size 102 depicted in FIG. 1 is a (2,2) sparsity block. Other sparsity block sizes are possible, such as, but not limited to, (2,1), (2,2), (4,1), (2,4), (4,4) and (8,1). An example sparsity group size 103, as depicted in FIG. 1, includes four blocks - of which two of the blocks have all non-zero elements (i.e., gray-shaded areas), and two of the blocks may have all zero elements (i.e., white areas). Each sparsity group 103a-103d depicts a different 2:4 sparsity group, that is, each sparsity group has a different 2:4 block-wise sparsity pattern. In particular, each sparsity group has four blocks in which only two of the four blocks have zero elements and the other two blocks have non-zero elements. It should be understood, however, that the subject matter disclosed herein is not limited to a 2:4 block-wise sparsity pattern, and is generally applicable to N:M sparsity structure patterns. As a sparsity block becomes coarser, the accuracy of the network may be reduced in comparison to the accuracy of a dense network.

A software (SW) aspect of the HW/SW codesign includes a block size and block-wise sparsity pattern, which can be a random sparsity pattern or a structured sparsity pattern. A hardware (HW) aspect of the HW/SW codesign includes clusters of PEs (i.e., MAC units) in which each cluster overhead has a relatively smaller size as compared to the overhead for PEs that are configured for fine-grained sparsity. That is, the cumulative hardware overhead for a PE cluster is smaller than the cumulative hardware overhead associated with each individual PE in an accelerator configured for fine-grained sparsity, which includes overhead circuitry for each PE, such as inputs multiplexers and the wiring accompanying an input-routing configuration. The HW aspect for block-wise sparsity supports a block-size (k,c) in which the k dimension in a block size of (k,c) allows sparsity logic and activation to be reused (amortized) among k PEs of a hardware accelerator. For instance, a block size in which k = 2, 4 or 8 respectively minimizes a cumulative overhead by a factor of 50%, 75% and 87% as compared to a fine-grain sparsity accelerator configuration.

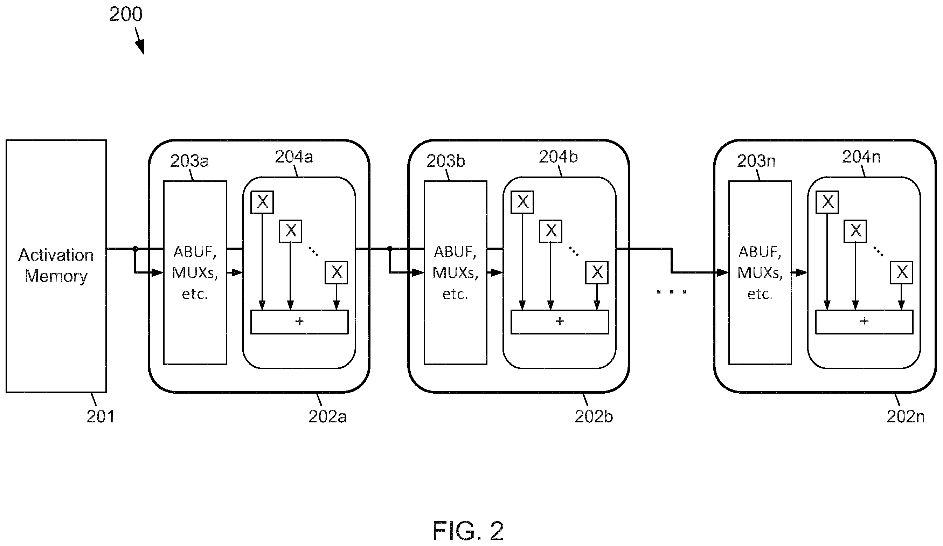

FIG. 2 depicts a block diagram of an example embodiment of hardware for a conventional accelerator 200 that is configured for fine-grained sparsity. The conventional accelerator 200 includes an activation memory 201 and multiple PEs 202a-202n. Weights and output memories are not shown for simplicity. Each PE 202 includes overhead hardware circuitry 203 and a Multiply and Accumulate (MAC) unit 204. A MAC unit 204 performs a dot-product operation, and includes an array of multipliers followed by an adder tree and an accumulator. The output of the multipliers in the array are summed together (i.e., reduced) by the adder tree, and the result of the adder tree is added in the accumulator. Activation values stored in the activation memory 201 are output to each of the overhead hardware circuits 203a-203n. Activation values stored in each respective overhead hardware circuits 203 are input to and processed by a corresponding MAC unit 204.

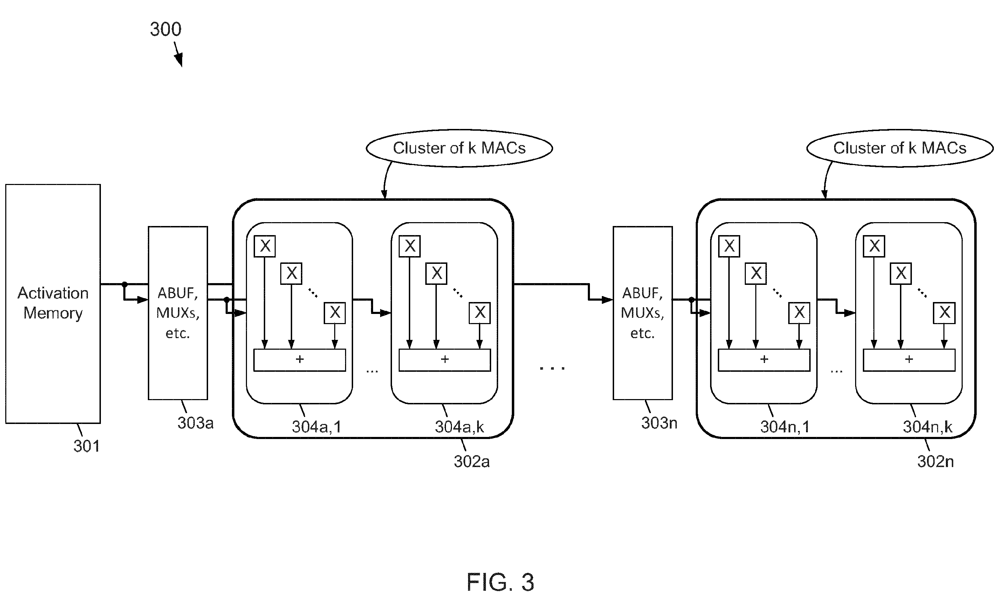

FIG. 3 depict a block diagram of an example embodiment of hardware for an block-wise sparsity accelerator 300 according to the subject matter disclosed herein. The accelerator 300 includes an activation memory 301 and multiple PE clusters 302a-302n. Each PE cluster 302x includes overhead hardware circuitry 303x and multiple MAC units 304x,1-304x,k. Activation values stored in the activation memory 301 are output to each of the overhead hardware circuits 303a-303n. Each respective overhead hardware circuit 303x broadcasts activation values to the multiple MAC units 304x,1-304x,k corresponding to the overhead hardware circuit 303x. The MAC units 304 of a cluster process the broadcast activation values. In contrast to the conventional accelerator 200 depicted in FIG. 2, the accelerator 300 has k times fewer overhead hardware circuits than for the accelerator 200.

The c dimension in a block size (k,c) provides a benefit over a situation in which non-zero weights are "borrowed" from different MAC units 304. By "borrowing" non-zero weights, consider a first multiplier in the MAC unit 204a in the conventional accelerator 200 (FIG. 2) that has a zero weight value as a scheduled computation. This ineffectual multiply-by-zero operation may be skipped and the next non-zero weight value from the same dot-product inputs scheduled for the MAC unit 204a may be used. Alternatively, a non-zero weight value may be routed (i.e., borrowed) from scheduled computations for, for example, the MAC unit 204b that replaces the zero weight value scheduled for the first multiplier in the MAC unit 204a. Since the routed, or "borrowed," weight value is from the different MAC unit 204b, the computed output should be summed using a different (additional) adder-tree within the MAC unit 204a, and the result is then routed back to accumulators of the MAC unit 204b. The configuration of the conventional accelerator 200, which is not configured to utilize block-wise structured sparsity, involves the extra hardware overhead of multiple adder trees within a MAC unit 204. The c dimension does not add hardware when a N:M structured sparsity is used, such as a 2:4 structured sparsity. However, it may be useful for weights with random sparsity patterns. The reason is that N:M is a predicted structure and easier to utilize within each MAC array unit (e.g., MAC 304a) and non-zero operations do not need to be borrowed that are scheduled to be processed in different MAC array units.

It should be noted that the accelerator core dimension is independent from the input tensor (FIG. 1) In a situation in which the input dimension of the input tensor is less than the accelerator core dimension, then part of the core is used, while the remaining part is underutilized. If the tensor input dimension is greater than the accelerator core dimension, then the input tensor is divided into smaller pieces and the core computation is provided each piece individually.

Table 1 shows inference accuracy results for a Resenet-50 network using block-wise sparsity of different block sizes having a 2:4 sparsity pattern and in which the first layer (i.e., the RGB layer) has not been pruned. As can be seen in Table 1, inference accuracy results using block-wise sparsity compares favorably with inference accuracy results for a dense network configuration.

**Table 1**

| Block Size (k,c) | # Epochs | Top 1 | Top 5 |
|---|---|---|---|
| Dense | 100 | 76.77 | 93.30 |
| (2,1) | 100 | 76.31 (0.45) | 92.97 |
| (2,2) | 100 | 75.72 | 92.76 |
| (4,1) | 100/120 | 75.84/75.94 | 92.88/92.86 |
| (2,4) | 100 | 75.44 | 92.82 |
| (4,4) | 100 | 74.89 | 92.18 |
| (8,1) | 100 | 75.51 | 92.22 |

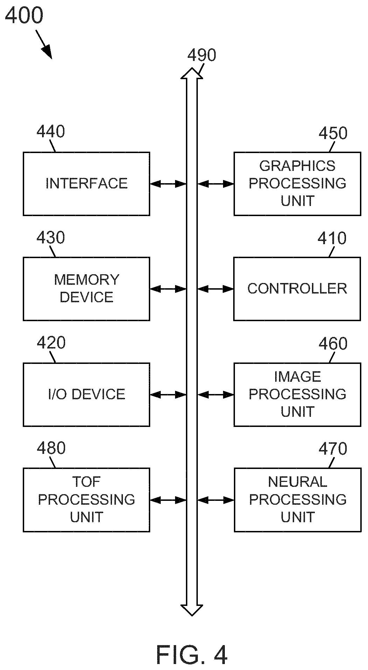

FIG. 4 depicts an electronic device 400 that may include a DNN that utilizes block-wise sparsity according to the subject matter disclosed herein. Electronic device 400 and the various system components of electronic device 400 may be formed from one or modules. The electronic device 400 may include a controller (or CPU) 410, an input/output device 420 such as, but not limited to, a keypad, a keyboard, a display, a touch-screen display, a 2D image sensor, a 3D image sensor, a memory 430, an interface 440, a GPU 450, an imaging-processing unit 460, a neural processing unit 470, a TOF processing unit 480 that are coupled to each other through a bus 490. In one embodiment, the neural processing unit 470 may be configured to utilize block-wise sparsity according to the subject matter disclosed herein. In one embodiment, the 2D image sensor and/or the 3D image sensor may be part of the imaging processing unit 460. In another embodiment, the 3D image sensor may be part of the TOF processing unit 480. The controller 410 may include, for example, at least one microprocessor, at least one digital signal processor, at least one microcontroller, or the like. The memory 430 may be configured to store command codes that are to be used by the controller 410 and/or to store a user data.

The interface 440 may be configured to include a wireless interface that is configured to transmit data to or receive data from, for example, a wireless communication network using a RF signal. The wireless interface 440 may include, for example, an antenna. The electronic system 400 also may be used in a communication interface protocol of a communication system, such as, but not limited to, Code Division Multiple Access (CDMA), Global System for Mobile Communications (GSM), North American Digital Communications (NADC), Extended Time Division Multiple Access (E-TDMA), Wideband CDMA (WCDMA), CDMA2000, Wi-Fi, Municipal Wi-Fi (Muni Wi-Fi), Bluetooth, Digital Enhanced Cordless Telecommunications (DECT), Wireless Universal Serial Bus (Wireless USB), Fast low-latency access with seamless handoff Orthogonal Frequency Division Multiplexing (Flash-OFDM), IEEE 802.20, General Packet Radio Service (GPRS), iBurst, Wireless Broadband (WiBro), WiMAX, WiMAX-Advanced, Universal Mobile Telecommunication Service - Time Division Duplex (UMTS-TDD), High Speed Packet Access (HSPA), Evolution Data Optimized (EVDO), Long Term Evolution - Advanced (LTE-Advanced), Multichannel Multipoint Distribution Service (MMDS), Fifth-Generation Wireless (5G), Sixth-Generation Wireless (6G), and so forth.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

## Claims

1. An accelerator core, comprising:
a first buffer configured to receive at least one group (103) of block-wise sparsified first elements, each group (103) comprising M blocks of first elements, a block size (k,c) of each block comprising k rows and c columns in which k is greater than or equal to 2, k times p equals K, c times q equals C in which K is an output channel dimension of a tensor of first elements, C is a number of input channels of the tensor of first elements, M is an integer, p is an integer and q is an integer, wherein in a group (103) of M consecutive blocks, N blocks have only non-zeros and the other blocks have only zeros;
a second buffer configured to receive second elements; and
at least two groups (103) of k processing elements (PEs) in each group (103), each respective group (103) of PEs being configured to receive from the first buffer k rows of first elements from a block of first elements corresponding to the group (103) of PEs, and configured to receive second elements from the second buffer that correspond to first elements received from the first buffer,
wherein the at least one group (103) of block-wise sparsified first elements are arranged in a N:M block-wise structured sparsity in which N is an integer,
wherein the N:M block-wise structured sparsity comprises a 2:4 block-wise structured sparsity.

2. The accelerator core of claim 1, wherein the block size (k,c) comprises one of (1,4), (2,1), (2,2), (4,1), (2,4), (4,4) and (8,1).

3. The accelerator core of claim 1 or 2, further comprising at least one second buffer, each respective second buffer being associated with a corresponding group of PEs.

4. The accelerator core of claim 3, wherein each respective second buffer broadcasts second elements to the k PEs in a group (103) of PEs that corresponds to the second buffer.

5. The accelerator core of any one of claims 1 to 4, wherein each PE generates a dot-product of the first elements and the second elements received by the PE.

6. The accelerator core of claim 5, wherein the first elements comprise weight elements and the second elements comprise activation elements.

7. The accelerator core according to any one of claims 1 to 6, wherein:
the first buffer is a weight buffer,
the first elements are weight elements,
the second buffer is an activation buffer, and
the second elements are activation elements.

8. The accelerator core of claim 7, further comprising at least one activation buffer, each respective activation buffer being associated with a corresponding group of PEs.

9. The accelerator core of claim 8, wherein each respective activation buffer broadcasts activation elements to the k PEs in a group (103) of PEs that corresponds to the activation buffer.

## Patentansprüche

1. Beschleunigerkern, aufweisend:
einen ersten Puffer, der dazu konfiguriert ist, mindestens eine Gruppe (103) blockweise sparsifizierter erster Elemente zu empfangen, wobei jede Gruppe (103) M Blöcke erster Elemente aufweist, wobei eine Blockgröße (k,c) jedes Blocks k Zeilen und c Spalten aufweist, wobei k größer oder gleich 2 ist, k mal p gleich K ist, c mal q gleich C ist, wobei K eine Ausgangskanaldimension eines Tensors erster Elemente ist, C eine Anzahl von Eingangskanälen des Tensors erster Elemente ist, M eine Ganzzahl ist, p eine Ganzzahl ist und q eine Ganzzahl ist, wobei in einer Gruppe (103) aus M aufeinanderfolgenden Blöcken N Blöcke nur Nichtnullwerte aufweisen und die anderen Blöcke nur Nullwerte aufweisen;
einen zweiten Puffer, der dazu konfiguriert ist, zweite Elemente zu empfangen; und
mindestens zwei Gruppen (103) mit jeweils k Verarbeitungselementen (PEs), wobei jede jeweilige Gruppe (103) von Verarbeitungselementen dazu konfiguriert ist, aus dem ersten Puffer k Zeilen erster Elemente aus einem Block erster Elemente zu empfangen, der der Gruppe (103) von Verarbeitungselementen entspricht, und dazu konfiguriert ist, zweite Elemente aus dem zweiten Puffer zu empfangen, die den aus dem ersten Puffer empfangenen ersten Elementen entsprechen,
wobei die mindestens eine Gruppe (103) blockweise sparsifizierter erster Elemente in einer blockweise strukturierten N:M-Sparsität angeordnet ist, wobei N eine Ganzzahl ist,
wobei die blockweise strukturierte N:M-Sparsität eine blockweise strukturierte 2:4-Sparsität aufweist.

2. Beschleunigerkern nach Anspruch 1, wobei die Blockgröße (k,c) eine von (1,4), (2,1), (2,2), (4,1), (2,4), (4,4) und (8,1) aufweist.

3. Beschleunigerkern nach Anspruch 1 oder 2, ferner aufweisend mindestens einen zweiten Puffer, wobei jeder jeweilige zweite Puffer einer entsprechenden Gruppe von Verarbeitungselementen zugeordnet ist.

4. Beschleunigerkern nach Anspruch 3, wobei jeder jeweilige zweite Puffer zweite Elemente per Broadcast an die k Verarbeitungselementen in einer Gruppe (103) von Verarbeitungselementen überträgt, die dem zweiten Puffer entspricht.

5. Beschleunigerkern nach einem der Ansprüche 1 bis 4, wobei jedes Verarbeitungselement ein Skalarprodukt der von dem Verarbeitungselement empfangenen ersten Elemente und zweiten Elemente erzeugt.

6. Beschleunigerkern nach Anspruch 5, wobei die ersten Elemente Gewichtselemente aufweisen und die zweiten Elemente Aktivierungselemente aufweisen.

7. Beschleunigerkern nach einem der Ansprüche 1 bis 6, wobei:
der erste Puffer ein Gewichtspuffer ist,
die ersten Elemente Gewichtselemente sind,
der zweite Puffer ein Aktivierungspuffer ist, und
die zweiten Elemente Aktivierungselemente sind.

8. Beschleunigerkern nach Anspruch 7, ferner aufweisend mindestens einen Aktivierungspuffer, wobei jeder jeweilige Aktivierungspuffer einer entsprechenden Gruppe von Verarbeitungselementen zugeordnet ist.

9. Beschleunigerkern nach Anspruch 8, wobei jeder jeweilige Aktivierungspuffer Aktivierungselemente per Broadcast an die k Verarbeitungselementen in einer Gruppe (103) von Verarbeitungselementen überträgt, die dem Aktivierungspuffer entspricht.

## Revendications

1. Cœur d'accélérateur, comprenant :
une première mémoire tampon configurée pour recevoir au moins un groupe (103) de premiers éléments sparsifiés par blocs, chaque groupe (103) comprenant M blocs de premiers éléments, une taille de bloc (k,c) de chaque bloc comprenant k lignes et c colonnes, dans laquelle k est supérieur ou égal à 2, k multiplié par p est égal à K, c multiplié par q est égal à C, où K est une dimension de canaux de sortie d'un tenseur de premiers éléments, C est un nombre de canaux d'entrée du tenseur de premiers éléments, M est un entier, p est un entier et q est un entier, dans lequel, dans un groupe (103) de M blocs consécutifs, N blocs contiennent uniquement des éléments non nuls et les autres blocs contiennent uniquement des éléments nuls ;
une deuxième mémoire tampon configurée pour recevoir des deuxièmes éléments ; et
au moins deux groupes (103) de k éléments de traitement (PE) dans chaque groupe (103), chaque groupe (103) respectif d'éléments de traitement étant configuré pour recevoir, depuis la première mémoire tampon, k lignes de premiers éléments à partir d'un bloc de premiers éléments correspondant au groupe (103) d'éléments de traitement, et configuré pour recevoir, depuis la deuxième mémoire tampon, des deuxièmes éléments qui correspondent aux premiers éléments reçus depuis la première mémoire tampon,
dans lequel l'au moins un groupe (103) de premiers éléments sparsifiés par blocs est agencé selon une sparsité structurée par blocs N:M dans laquelle N est un entier,
dans lequel la sparsité structurée par blocs N:M comprend une sparsité structurée par blocs 2:4.

2. Cœur d'accélérateur selon la revendication 1, dans lequel la taille de bloc (k,c) est l'une de (1,4), (2,1), (2,2), (4,1), (2,4), (4,4) et (8,1).

3. Cœur d'accélérateur selon la revendication 1 ou 2, comprenant en outre au moins une deuxième mémoire tampon, chaque deuxième mémoire tampon respective étant associée à un groupe correspondant d'éléments de traitement.

4. Cœur d'accélérateur selon la revendication 3, dans lequel chaque deuxième mémoire tampon respective diffuse des deuxièmes éléments aux k éléments de traitement dans un groupe (103) d'éléments de traitement qui correspond à la deuxième mémoire tampon.

5. Cœur d'accélérateur selon l'une quelconque des revendications 1 à 4, dans lequel chaque élément de traitement génère un produit scalaire des premiers éléments et des deuxièmes éléments reçus par l'élément de traitement.

6. Cœur d'accélérateur selon la revendication 5, dans lequel les premiers éléments comprennent des éléments de poids et les deuxièmes éléments comprennent des éléments d'activation.

7. Cœur d'accélérateur selon l'une quelconque des revendications 1 à 6, dans lequel :
la première mémoire tampon est une mémoire tampon de poids,
les premiers éléments sont des éléments de poids,
la deuxième mémoire tampon est une mémoire tampon d'activation, et
les deuxièmes éléments sont des éléments d'activation.

8. Cœur d'accélérateur selon la revendication 7, comprenant en outre au moins une mémoire tampon d'activation, chaque mémoire tampon d'activation respective étant associée à un groupe correspondant d'éléments de traitement.

9. Cœur d'accélérateur selon la revendication 8, dans lequel chaque mémoire tampon d'activation respective diffuse des éléments d'activation aux k éléments de traitement dans un groupe (103) d'éléments de traitement qui correspond à la mémoire tampon d'activation.
